# EUROPEAN PATENT SPECIFICATION

(11) **EP 1 568 089 B1**
(45) Date of publication and mention of the grant of the patent: **19.12.2007**
(21) Application number: 03812398.0
(22) Date of filing: 07.11.2003
(51) Int. Cl.: H01M 2/12, H01M 10/28

(54) **A BIPOLAR BATTERY AND A METHOD FOR MANUFACTURING A BIPOLAR BATTERY**
BIPOLARBATTERIE UND VERFAHREN ZUR HERSTELLUNG EINER BIPOLARBATTERIE
ACCUMULATEUR BIPOLAIRE ET PROCEDE DE FABRICATION D'ACCUMULATEUR BIPOLAIRE

(30) Priority: 29.11.2002 SE 0203535; 09.05.2003 US 434168
(43) Date of publication of application: 31.08.2005
(73) Proprietor: Nilar International AB, 183 12 Täby (SE)
(72) Inventor: FREDRIKSSON, Lars, S-183 51 Täby (SE); PUESTER, Neil, H., Aurora, CO 80015-1711 (US)
(74) Representative: Hedman, Anders
(86) International application number: PCT/SE2003/001721
(87) International publication number: WO 2004/051767

(56) References cited:
- EP-A1- 0 631 338
- EP-A1- 0 676 822
- WO-A1-01/03224
- WO-A1-01/03225
- US-A- 4 164 068
- US-A- 4 275 130
- US-A- 4 614 025

## Description

### Technical field

The present invention relates to a bipolar battery, especially a NiMH battery, as defined in the preamble of claim 1. The invention also relates to a method for manufacturing a bipolar battery as defined in the preamble of claim 12.

### Background to the invention

Traditionally, bipolar batteries including several cells have been designed to have separately sealed cells to contain both electrolyte and gas created during operation. A problem that has occurred is the creation of an electrolyte path between adjacent cells due to inadequate sealing properties, which in turn mainly depend on a pressure difference between adjacent cells. The pressure difference arises when a cell starts to gas before the cell next to it starts gassing. This is a normal behaviour of cells in a bipolar battery.

A solution to this problem has been suggested in US 5,344,723 by Bronoel et al., which discloses a bipolar battery having a common gas chamber, which is created by providing an opening through the biplate (conductive support/separator). The opening is also provided with a hydrophobic barrier to prevent passage of electrolyte through the hole. Although the problem with pressure differences between the cells is solved, there is still a disadvantage with the described battery. The outer sealing around the edge of each biplate still has to be fluid-tight, which is very difficult to achieve. If the outer sealing is not fluid-tight, the electrolyte, contained in the separator between the electrodes, may form an electrolyte path from one cell to another.

Furthermore, the suggested solution is rather expensive to implement since an opening has to be made through the biplate to create the common pressure chamber. If the biplate is relatively thin, it is even harder to create an opening through the biplate because tears, stretching, or metal slivers may form.

A further approach of overcoming the above-mentioned problem is described in WO 01/03225.

There is a need for a battery that is easy to manufacture at affordable prices, and that are safe to handle during charge and discharge procedures.

### Summary of the invention

The object of the present invention is to provide a bipolar battery, preferably a bipolar NiMH battery that has a simplified construction compared to prior art bipolar batteries.

This object is achieved by a bipolar battery as defined in claim 1 and a method for manufacturing a bipolar battery as defined in claim 12.

An advantage with the present invention is that the bipolar battery is easier to manufacture compared to prior art bipolar batteries.

Another advantage is that the cost for manufacturing the bipolar battery is greatly reduced, while maintaining or even improving the operating properties of the bipolar battery.

Further objects and advantages of the present invention will be apparent to those skilled in the art from the following detailed description of the disclosed bipolar electrochemical battery and the biplate assembly.

### Brief description of the drawings

The different embodiments shown in the appended drawings are not to scale or proportion, but exaggerated to point out different important features for the sake of clarity.

Fig. 1 shows a planar view of a first embodiment of a biplate assembly according to the invention.

Fig. 2 shows a cross-sectional view along A-A in figure 1.

Fig. 3 shows a cross-sectional view of a second embodiment of a biplate assembly according to the invention.

Fig. 4 shows a cross-sectional view of a first embodiment of a bipolar battery according to the present invention.

Fig. 5 shows a cross-sectional view of a second embodiment of a bipolar battery according to the present invention.

Fig. 6 shows a planar view of a third embodiment of a biplate assembly according to the invention.

Fig. 7 shows a cross-sectional view along A-A in figure 6.

Fig. 8 shows a cross-sectional view of a third embodiment of a bipolar battery according to the present invention.

Fig. 9 shows a first embodiment of a combined frame and hydrophobic barrier according to the invention.

Fig. 10 shows a second embodiment of a combined frame and hydrophobic barrier according to the invention.

Fig. 11 shows a third embodiment of a combined frame and hydrophobic barrier according to the invention.

### Detailed description of preferred embodiments

The major benefits of the bipolar battery design are simplicity and low resistance losses. The parts count of the battery is relative low, consisting only of end plates and biplates, with appropriate assembly and sealing components. Batteries of a desired voltage are constructed by stacking the required number of biplates. The electrical connections between the cells are made as the battery is stacked, since each biplate is electrically conductive and impervious to electrolyte.

With the terminals at each end, the flow of current is perpendicular to the plate, which ensures uniform current and voltage distribution. Since the current path is very short the voltage drop is significantly reduced.

Bipolar batteries will also have significantly reduced weight, volume and manufacturing costs due to elimination of components and the manufacturing approach.

The major problem with bipolar batteries that has not been commercially solved before is obtaining a reliable seal between cells within the bipolar battery.

The seal on a cell is of extreme importance for all types of batteries, and bipolar batteries are no exception. Individual cells contain the active materials (for NiMH batteries it is Nickel hydroxide positive and metal hydride hydrogen storage alloy negative, respectively), separator and electrolyte. The electrolyte is required for ion transport between the electrodes. The best designs, optimised for longevity, weight and volume, require recombination of gasses.

Batteries always produce gasses as they are charged. The gassing rate increases as the battery nears full charge, and reaches maximum when fully charged. The gasses which are produced are primarily oxygen and hydrogen.

Batteries considered for power applications have thin electrodes. Long life with minimum weight and volume are required attributes, which requires a sealed construction.

Oxygen will recombine rather rapidly, so batteries are designed so oxygen will be the first gas generated if the cell is overcharged or overdischarged. This requires two actions:
1) Overbuild the negative active material, generally by 30%, to ensure that the positive electrode, which will gas oxygen, will be the first to gas.
2) Provide for gas passage from the positive to the negative, where the oxygen will recombine. The gas passages are obtained by controlling the amount of electrolyte within the pores of the electrode and through the separator. All surfaces of the electrode must be covered by a thin layer of electrolyte for the transport of ions, but the layer must be thin enough to permit gas diffusion through the layer, and must allow gas passages throughout the active layers and the separator.

The negative electrode would gas hydrogen if overcharged. Because hydrogen does not recombine quickly, pressure would build up within the cell. The oxygen recombination effectively discharges the negative at the same rate it is being charged, thus preventing overcharge of the negative.

The surface area of the active material, combined with the uniform voltage distribution of the bipolar design, enhances rapid recombination.

The bipolar approach will ensure that the voltage drop across the active material will be uniform in all areas, so that the entire electrode will come up to full charge at the same time. This will eliminate the major problem in conventional constructions, where parts of an electrode are overcharging and gassing while other (remote) areas of the electrode are not yet fully charged.

The cells in regular batteries are sealed to contain the electrolyte both for proper performance of the cells, and to prevent electrolyte paths between adjacent cells. The presence of electrolyte paths between cells will allow the electrolyte-connected cells to discharge at a rate that is determined by the resistivity of the path (length of path and cross section of path). The seals on bipolar batteries are more important because the electrolyte path is potentially much shorter. It should be noted that an important feature of this disclosure is the use of a horizontal electrolyte barrier to significantly increase the length of the potential path. An additional concern is the amount of heat generated by operation of the cell. Depending on the magnitude of heat generated, the design must be able to reject the heat and maintain a safe operating temperature.

If an electrolyte path is developed between cells, a small intercellular leakage can be overcome by the periodic full charging of the battery. The battery may be overcharged by a set amount and at a low rate. The low rate would allow fully charged cells to recombine gasses without generating pressure and dissipate the heat from the recombination/overcharge. Cells that have small intercellular electrical leakage paths would become balanced.

The flow of heat in a bipolar cell will occur in a radial direction, and in fact end plates are preferably somewhat insulated, to ensure that they operate at the same temperature as the rest of the battery.

It is rarely necessary that a battery be fully charged to achieve its useful function. Batteries are routinely over specified and overbuilt. If an operation requires 50 AH (Ampere Hours), the requirement is usually specified at least 10% higher. Since batteries lose capacity over their lifetime, the capacity of a new battery is increased by the expected loss, resulting in possibly a 70 AH requirement for a new battery in this example. The manufacturer will probably have a median design target of 75 AH to allow for variations in the manufacturing process. Much of this overbuild is to compensate for the life capacity degradation that is caused by the overcharging.

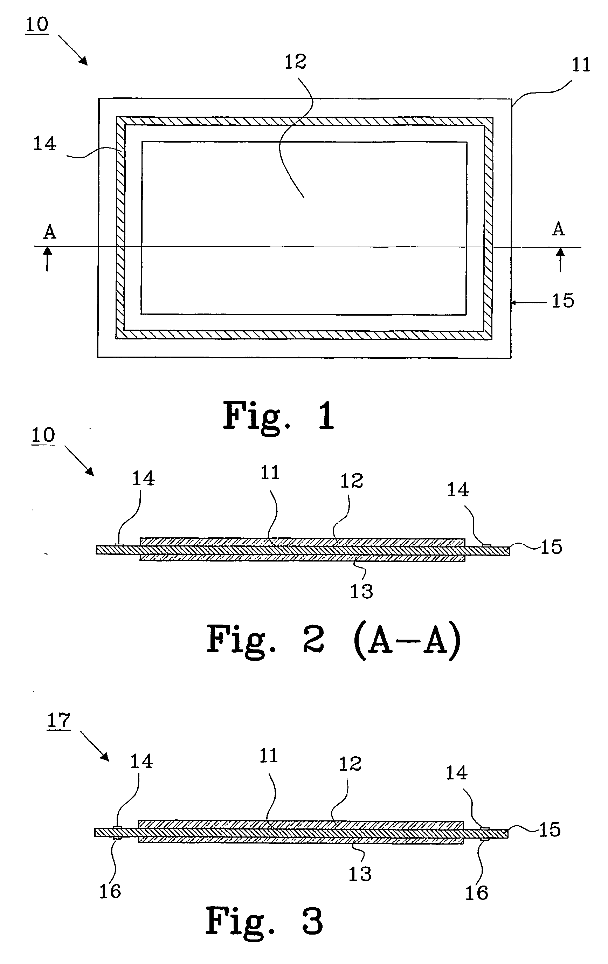

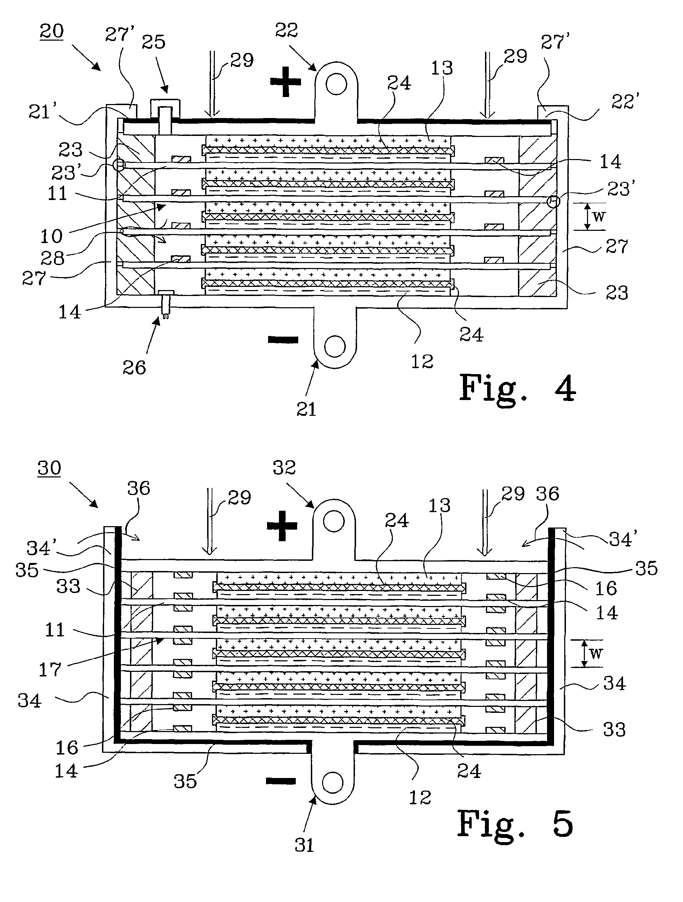

Figure 1 is a planar view and figure 2 is a cross sectional view (along A-A in figure 1) of a first embodiment of a biplate assembly 10 comprising a biplate 11, preferably made from Nickel or Nickel plated steel. A negative electrode 12 and a positive electrode 13 are attached to opposite sides, respectively, of the biplate 11. Each electrode is, in this embodiment, arranged to cover only a central portion of the side of the biplate 11 to leave space between each electrode and the edge 15 of the biplate 11 for implementing a means for creating a common gas space for all cells in the battery as described in connection with figure 4 and 5. A hydrophobic electrolyte barrier 14, preventing electrolyte leakage, is provided on one side of the biplate 11 around the electrode, preferably the negative electrode 12, as illustrated in the embodiment.

The essential part of the invention is that the electrolyte leakage around the perimeter of the electrodes is controlled by the hydrophobic barrier. It is not even necessary that the electrode covers a central portion of the biplate as long as there is sufficient space to implement the hydrophobic barrier and a frame that defines the width of each individual cell, as is discussed below.

The electrodes 12, 13 may be attached to the biplate 11 in many ways, but preferably the electrodes are manufactured directly onto the biplate by using pressed powder, as is disclosed in the published PCT application PCT/SE02/01359, with the title "A method for manufacturing a biplate assembly, a biplate assembly and a bipolar battery" by the same applicant. By using the method of pressing powder directly onto the biplate, thin electrodes having less active material may be manufactured.

The shape of the biplate is preferably rectangular to maximise the useful area of the biplate and to better use the biplate for heat conductive purposes. The maximum heat path will be limited to half the length of the shortest side of the rectangle.

The electrolyte barrier 14 is made from a suitable hydrophobic material, such as a flouropolymer or similar materials. The hydrophobic material may be applied to the biplate as a liquid or solid material and then cured in place, which will bond the barrier to the biplate in an efficient way to prevent electrolyte leakage between cells.

Figure 3 shows a cross sectional partial view of a second embodiment of a biplate assembly 17 comprising a biplate 11, a negative electrode 12, a positive electrode 13 and a hydrophobic barrier 14 as described in connection with figures 1 and 2. The second embodiment 17 also comprises an additional hydrophobic barrier 16 arranged around the positive electrode 13.

The means for creating a common gas space for all cells in a bipolar battery comprises a frame having a predetermined thickness which is the desired width of a cell. The frame is arranged between adjacent biplates and/or a biplate and an end plate, as described below. The frame is attached to the side of each biplate in a non-sealing manner to permit gas generated within a cell to escape the cell. In another embodiment, the frame is made with a thermoplastic elastomer compound that forms a better seal with the biplate, and one or more leakage channels can be moulded into the frame to ensure leakage path. When several biplate assemblies are stacked upon each other, as described in connection with figures 4, 5 and 8, a common gas space will be created which will eliminate the pressure difference between the cells in a bipolar battery.

Figure 4 shows a bipolar battery 20 in cross section having five cells. The battery comprises a negative end terminal 21 and a positive end terminal 22, each having a negative electrode 12 and a positive electrode 13, respectively. No hydrophobic barrier needs to be provided around the electrodes 12, 13 arranged to the end terminals 21 and 22. Four biplate assemblies 10 are stacked on top of each other in a sandwich structure between the two end terminals 21, 22. A separator 24 is arranged between each adjacent negative 12 and positive 13 electrodes making up a cell, the separator contains an electrolyte and a predetermined percentage of gas passages, about 5 % is a typical value for gas passages.

A frame 23 is provided between adjacent biplates 11 and/or a biplate 11 and an end terminal 21 or 22. As indicated in the figure by the arrow 28, gas may migrate from one cell to another and thereby all cells share a common gas space through the gas passages created between the frames 23 and the biplates 11. If an electrode in a cell starts to gas before the others, this pressure will be distributed through-out the whole common gas space.

If the pressure within the common space exceeds a predetermined value, a pressure relief valve 25 will open to connect the common gas space with the ambient environment. The pressure relief valve 25 is arranged through one of the end terminals, in this example the positive end terminal 22 and comprises a feed-through.

Additionally, a pressure sensor 26 may also be mounted through one of the end terminals, in this example the negative end terminal 21, to measure the actual pressure inside the battery cells. The negative end terminal 21 is designed as a part of a metallic casing 27, which is insulated against the biplates 11 and the positive end terminal 22 being a part of the bipolar battery. Each frame 23 is made from an insulating material and is designed in such a way to ensure electrical insulation between each biplate 11 and the metallic casing 27, by providing a recess 23' where the biplates and the positive end terminal are placed during manufacture and are maintained during operation by applying a pressure as indicated by the arrows 29.

The pressure is maintained by folding down a part of the metallic casing 27, and will ensure that each cell has a predetermined width w, which is approximately equal to the height of the frame 23. To avoid an electrical connection between the casing 27 and the positive end terminal 22, there is provided an insulating layer 22' on top of the positive end terminal 22. Alternatively, the cover may be fixed in position by any of several other standard means, including crimping, welding, interference fits, epoxy, heat seal or solvent, depending of the battery case construction and battery application criteria.

Relief valves and pressure sensors are readily available to a man skilled in the arts and are not described in more detail.

The bipolar battery according to figure 4 is manufactured by the following steps:
(1) A casing 27 is provided, which will serve as the negative end terminal 21 together with a negative electrode 12.
(2) A first separator 24 is arranged on top of the negative electrode 12 and a first frame 23 is arranged around the electrode 12. Electrolyte is naturally added to the separator.
(3) A first biplate assembly 10, as described in connection with figures 1 and 2, is arranged on top of the frame 23 so that the biplate 11 is positioned in the recess 23'.
(4) A second separator 24, provided with electrolyte, is arranged on top of the negative electrode 12 of the first biplate assembly 10, and a second frame 23 is arranged around the electrode 12.
   Step (3) and (4) are repeated until a desired number of cells have been created.
(5) A positive end terminal 22, including a positive electrode 13 and an insulating outer layer 22', is thereafter placed in the recess 23' of the upper frame 23.
(6) A pressure is applied to the stacked components making up the bipolar battery as indicated by arrows 29.
(7) The upper edge 27' of the metallic casing 27 is thereafter folded down to maintain the applied pressure.

The bipolar battery is completed.

Figure 5 shows a second embodiment of a bipolar battery 30 according to the invention, comprising a negative end terminal 31, a positive end terminal 32 and four stacked biplate assemblies 17. The construction of this battery differs from the battery described in connection with figure 4 in the following way.

No recess is present in the frame 33 determining the width w of each cell. Hydrophobic electrolyte barriers 14 and 16 are present around both the negative electrode 12 and the positive electrode 13 that will prevent passages of electrolyte from one cell to another around the edge of the biplate 11. Hydrophobic barriers are even present around the negative 12 and positive 13 electrodes of the end terminals, although this is not necessary to maintain operation of the battery. A metallic casing 34 is provided having an insulating layer 35 arranged on the inside, and a separate negative end terminal 31 is therefore present.

The main feature of the second embodiment is that it is possible to further simplify the manufacturing method by coating the inside of the casing 34 with an insulating layer 35. The frames 33 in this embodiment only have the purpose of determining the width w of each cell and electrically insulate the biplates 11 and end terminals 31, 32 from each other. On the other hand a non-metal casing could be used instead of a metal casing provided with an insulating layer on the inside. Any type of suitable containers known to the battery industry, including moulded plastic containers, could be used as casing for the bipolar battery according to the invention, as long as the battery operates at an appropriate pressure.

It is of course possible to remove the insulating layer from the bottom of the metal casing 34, and allow the negative end terminal 31 to be in contact with the casing 34.

The bipolar battery according to figure 5 is manufactured by the following steps:
(1) A casing 34 is provided, having an insulated layer 35 arranged on the inside, or being made from a non-conductive material, such as moulded plastics.
(2) A negative end terminal 31, including a negative electrode 12 with a hydrophobic barrier 14 around it, is arranged within the casing and the terminal is accessible through an opening in the bottom of the casing 34.
(3) A first separator 24 is arranged on top of the negative electrode 12 and a first frame 33 is arranged around the electrode 12. Electrolyte is naturally added to the separator.
(4) A first biplate assembly 17, as described in connection with figure 3, is arranged on top of the frame 23 so that the edge of the biplate 11 is close to the insulated layer 35.
(5) A second separator 24, provided with electrolyte, is arranged on top of the negative electrode 12 of the first biplate assembly 17, and a second frame 33 is arranged around the electrode 12.
   Step (4) and (5) are repeated until a desired number of cells have been created.
(6) A positive end terminal 32, including a positive electrode 13, and an inner barrier 16, is thereafter placed on top of the upper frame 33.
(7) A pressure is applied to the stacked components making up the bipolar battery as indicated by arrows 29.
(8) The upper edge 34' of the metallic casing 34 is thereafter folded down, as indicated by the arrows 36, or fixed in position in an applicable way if a non-metal casing has been used, to maintain the applied pressure.

The bipolar battery is completed.

The frames 33 provided between the biplates 11, and the biplate 11 and the end terminals 31, 32, will create a common gas space and, as described in connection with figure 4, the electrolyte barrier 14 together with the additional barrier 16, will prevent passages of electrolyte from one cell to another. Preferably, a pressure relief value (not shown) is provided together with a pressure sensor (not shown) to monitor the pressure within the battery. The pressure relief valve and the pressure sensor may be mounted on any suitable surface as long as there is a communicating passage to the commonly connected cells of the battery.

In the case where a non-conductive casing has been used, terminations may go from the end plates 31, 32 to terminal penetrations in any fashion known to a person skilled in the art, and could be routed, either internally or externally, to be located on any or the same surface as the end plates.

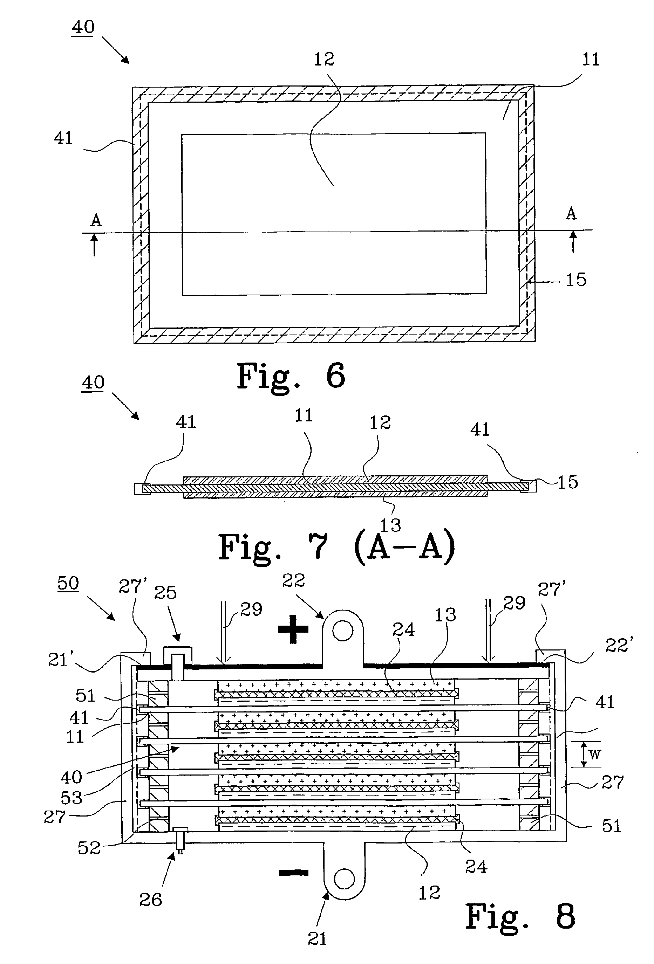

Figure 6 shows a planar view of a third embodiment of a biplate assembly 40, and figure 7 shows a cross-sectional view along A-A in figure 6. A negative electrode 12 and a positive electrode 13 are arranged on each respective side of a biplate 11, as previously described in connection with figures 1-3.

A hydrophobic barrier 41 is provided around the edge of the biplate 11. In this embodiment, a part of the positive and negative side of the biplate 11 is covered with the hydrophobic barrier, although this is not necessary to obtain the advantages of the hydrophobic barrier. However, the biplate will in some applications be very thin and there will be a problem when attaching the hydrophobic barrier only to the edge of the biplate 11.

Figure 8 shows a third embodiment of a bipolar battery 50 using biplate assemblies 40 as disclosed in figure 6 and 7. The basic construction of the battery 50 is the same as the battery described in connection with figure 4 with a few exceptions:
- Frames 51 of a different type have been used, that are similar to the frames used in the battery described in figure 5, having an opening 52 to provide a gas passage between each cell and the space near the casing 27.
- At least one ridge 53 is also provided along the inside of the casing 27 to define the position of the edge of the biplate assembly 40. The distance between the casing and the biplate assembly 40 is defined by the height of the ridge 53, and the space created will allow gas passage between the cells.
- The hydrophobic barrier 41 is provided on the outside of the frames 51 and the ridge 53 define the space that will allow gas passage on the side of the hydrophobic barrier 41.

The frames 23, 33 and 51, used in the embodiments above, are providing a controlled gaseous leakage between adjacent cells, but the present hydrophobic barrier 14, 16 and 41 will prohibit the creating of an electrolyte path between adjacent cells. To further enhance the built-in gaseous leakage between the cells, a rough surface of the frame may be provided to ensure a higher degree of non-sealing between the frame and the biplates 11.

The frame 23, 33 and 51 preferably has good heat conductive properties, so that heat created within the battery easily can escape through the casing 27, 34. Preferably, the insulation 35 provided on the inside of the casing 34 in figure 5 also has good heat conducting properties for the same reason as discussed above.

The positive active material in a NiMH battery manufactured according to the invention is preferably made from spherical nickel hydroxide (supplied by OMG, Finland); Nickel 210 fiber (supplied by INCO, USA); and Powdered Cobalt (obtainable from various suppliers). The negative material is preferably made with Metal Hydride (supplied by Treibacher, Austria) ; and Nickel 255 fiber (supplied by INCO, USA). There are numerous suppliers of all these materials, particularly in Japan and China, where the majority of Nickel Metal Hydride cells presently are manufactured.

No other materials, such as conductive additives, binders, etc. are used in the following illustrative example. The nickel fibers INCO 210 and 255 serve as the conductive additives and make contact with the conductive biplate, conducting current from the active material directly to the conductive biplate. Any type of electrode construction could be used either as it is, or with a layer of any conductive material that improves contact, to benefit from the construction according to the invention.

The essential feature of the invention is the built-in leakage that will provide the possibility to use of the battery container as the common pressure vessel without having to provide a liquid and a gas seal in each cell, nor a hole with a barrier in each biplate. The presence of at least one hydrophobic barrier between a positive and a negative electrode arranged adjacent to a biplate will prevent electrolyte leakage between adjacent cells, as discussed above.

The concept of the invention will work for a wide variety of dimensions, such as the physical dimensions of the frame, the thickness of the electrodes, biplates, and separator. The key is the distance between the biplates defining a cell. It is necessary that the gap is sufficient that any capillary wetting forces between the biplates are less than the hydrophobic properties of the barriers. The gap is equally dependent upon the quality of electrolyte available in the battery. Obviously, a battery that is flooded with electrolyte will not be prevented from forming an electrolyte bridge regardless of the hydrophobic properties and dimensions of the barriers. A complete seal is required for flooded batteries.

In the design of starved electrolyte batteries, which is applicable to the present invention, is how all sealed Nickel Metal Hydride batteries are designed. The quantity of electrolyte plays an important factor in the life of the battery. The electrodes and the separator compete for the available electrolyte, along with the wetting of the biplate surface. The lower amount of electrolyte, the smaller the barrier requirement, but also the lower the life of the battery.

Design features such as the compression of the separator impacts the capillary forces within the separator. The choice of separator could be relevant due to their ability to retain and absorb electrolyte. Cylindrical cells require strong separator to withstand the automated winding assembly process. As a consequence, they use larger diameter fibres to achieve the strength. Separators made with these fibres have lower electrolyte retention and absorption properties, and lose electrolyte to the electrodes as the electrodes dry or absorb electrolyte within the electrode. The use of finer fibres, with a higher absorption and electrolyte retention properties are desirable in batteries, and are the preferred material for use in the bipolar battery with built-in leakage. The separator fibers should have a diameter in the range of 0.0001 to 0.015 inches (approx. 2.5 to 400 *µ*m), preferably in the range of 0.003 to 0.008 inches (approx. 76 to 200 *µ*m).

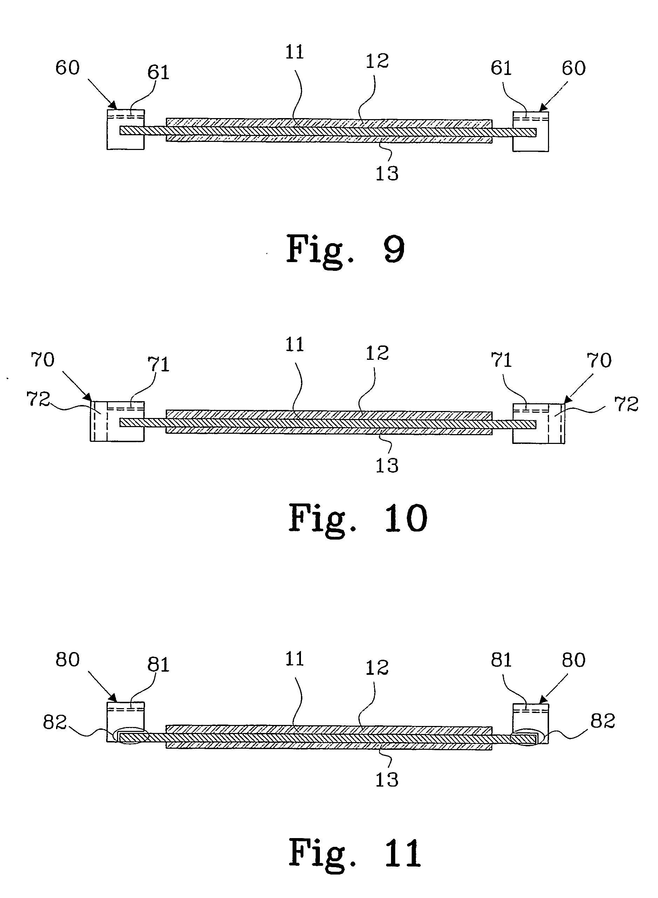

The frame material may be any suitable material that is non-conductive and that is compatible with the electrochemical environment inside the battery cells. The preferred approach is to mould the frames, and any injection mouldable material from the generic families of ABS or polypropylene is acceptable. A mouldable thermoplastic elastomer compound could also be used as frame material. An example of a material for use in moulding the frames is Kraton G 7705 or equivalent. When this material is compressed it forms an adequate seal to prevent electrolyte paths, and it is also possible to mould passages in the material to ensure gas flow leakage paths as desired, see figures 9-11.

The invention relies on the feature of allowing gas passage, but preventing passage of electrolyte, between cells. The required dimension of the gas passage must be adequate for the passage of all gasses generated on overcharge, and a lower limit for cells up to 10 AH (Ampere Hours) is an opening with a cross section of 0.003 square inches (approx. 1.94 mm²). The cross section of the opening is proportionally larger, or more openings are provided, as the battery capacity for each cell increases.

The width of the hydrophobic barrier, which prevents electrolyte migration between adjacent cells, is preferably in the range 0.020 to 0.125 inches (approx. 0.5 to 3 mm), and more preferably in the range of 0.050 to 0.060 inches (approx. 1.3 to 1.5 mm. The thickness of the hydrophobic barrier depends on the material and means of application. As thin as possible is preferred.

An illustrative example of a biplate assembly and a bipolar NiMH battery will be described in more detail below as a non-limited example to further illustrate the benefits from the inventive design.

In an example of a 10 AH cell in a NiMH battery, the height of the frame depends on the application and thus the thickness of the electrodes. The thickness of the electrodes is in the range of 0.002 to 0.050 inches (approx. 0.05 to 1.3 mm), with a preferred range of 0.010 to 0.035 inches (approx. 0.25 to 0.90 mm). The electrodes normally have the shape of a rectangle with a width of not more than 6 inches (approx. 150 mm) due to temperature requirements and a hydrophobic barrier arranged around each electrode. The thickness of the biplate is in the range of 0.001 to 0.005 inches (approx. 25 to 125 *µ*m), preferably in the range of 0.0025 to 0.003 inches (approx. 64 to 76 *µ*m).

Figures 9-11 show three different embodiments for a combined frame and hydrophobic barrier.

The first embodiment of a frame 60 made from a hydrophobic material is shown in figure 9. The frame is moulded to the biplate 11 and a moulded channel 61, extending to the outside of the frame, is provided in the frame 60.

The second embodiment, shown in figure 10, comprises a frame 70 made from a hydrophobic material. The frame is moulded to the biplate 11, as the frame 60 discussed in connection with figure 9, and a moulded channel 71, extends from the inside of the battery cell to a moulded hole 72 within the frame 70.

The third embodiment, shown in figure 11, also comprises a frame 80 made from a hydrophobic material. The frame is separately moulded, provided with a recess 81 for holding the biplate 11 and provided with a moulded channel 82, extending to the outside of the frame 80.

When the hydrophobic frame 60-80, as disclosed in connection with figures 9 to 11, is put under pressure, during the last stage of the assembly process, it will provide an adequate seal against the biplate 11 to prevent any electrolyte paths to be formed between adjacent cells. Thus eliminating the need for a separately arranged hydrophobic barrier, as illustrated in figures 1 to 8.

The means used to provide the pressure inside the finally assembled battery could also include the use of tie rods between the end plates. The tie rods could even be applied in a central part of the end plates, which indicate that they pass through the electrode area. If one or more holes within the electrode area are necessary, a hydrophobic barrier is needed around each hole to prevent electrolyte leakage between adjacent cells and equivalent clearance of the tie rods from the electrodes to the separator, from the separator to the hydrophobic barrier, and the designed hole.

## Claims

1. A non-flooded bipolar battery (20; 30) having at least two battery cells comprising:
- a housing,
- a negative end terminal (21; 31) having a negative electrode (12),
- a positive end terminal (22; 32) having a positive electrode (13),
- at least one biplate assembly (10; 17), each having a negative electrode (12) mounted on a negative side of a biplate (11) and a positive electrode (13) mounted on a positive side, being opposite to said negative side, of the biplate (11), arranged in a sandwich structure between said negative (21; 31) and positive (22; 32) end terminals, and
- a separator (24) arranged between each negative (12) and positive (13) electrode forming a battery cell, said separator (24) including an electrolyte,
**characterised in that**
- an inner barrier (14; 16) of a hydrophobic material is arranged around the perimeter of at least one electrode (12) on a first side of each biplate (11), whereby said inner barrier (14; 16) prevents an electrolyte path from one cell to another cell, and
- a frame (23; 33) is present to provide a predetermined cell spacing (w) between each biplate (11) and/or biplate (11) and end terminal (21, 22; 31, 32), said frame (23; 33) is attached in a non-sealing manner to each biplate (11) to permit ambient gas to pass between adjacent cells, thereby creating a common gas space for all cells in the battery.

2. The bipolar battery according to claim 1, wherein said first side is the negative side and the inner barrier (14)is arranged at least around the perimeter of the negative electrode (12) on the negative side of each biplate (11).

3. The bipolar battery according to claim 2, wherein an additional inner barrier (16) is arranged around the perimeter of the positive electrode (13) on the positive side of each biplate (11).

4. The bipolar battery according to any of claims 1-3, wherein one of the end terminals (22) is provided with a pressure relief valve (25) to allow the common gas space to be connected to the ambient environment if the pressure in the common gas space exceeds a predetermined value.

5. The bipolar battery according to any of claims 1-4, wherein a pressure sensor (26) is attached to one of the end terminals (21) to monitor the pressure inside the common gas space.

6. The bipolar battery according to any of claims 1-5, wherein the frame is made from a hydrophobic material with moulded gas passages, whereby the frame acts as the inner barrier.

7. The bipolar battery according to any of claims 1-6, wherein the sealed housing comprises a casing (27; 34) to which at least one of said end terminals (21; 31, 32) and each biplate (11) are electrically insulated, the casing being attached to one of said end terminals (21; 31) in a gas tight manner thereby providing said sealed housing.

8. The bipolar battery according to claim 7, wherein the inside of said casing (34) is at least partially arranged with an insulating layer (35) to provided said insulation.

9. The bipolar battery according to claim 7, wherein each frame (23) is made of an electrically insulating material and is arranged within the battery to provide said insulation.

10. The bipolar battery according to any of claims 1-9, wherein said hydrophobic barrier (14) is a flouropolymer material or a similar material.

11. The bipolar battery according to any of claims 1-10, wherein the bipolar battery is a NiMH battery.

12. A method to manufacture a non-flooded bipolar battery (20; 30) having at least two cells comprising the steps of:
- providing a housing
- arranging a first end terminal (21; 22) having a negative electrode (12) within the housing,
- arranging at least one biplate assembly (10; 17), each having a negative electrode (12) mounted on a negative side of a biplate (11) and a positive electrode (13) mounted on a positive side, being opposite to said negative side, of the biplate (11), in a sandwich structure between said first end terminal (21; 31) and a second end terminal (22; 32), having a positive electrode (13) within said housing, and
- arranging a separator (24) between each negative (12) and positive (13) electrode forming a battery cell, said separator (24) including an electrolyte,
**characterised in that** the method further comprises the steps of:
- providing an inner barrier (14; 16) of a hydrophobic material arranged around the perimeter of at least one electrode (12) on a first side of each biplate (11), whereby said inner barrier (14; 16) prevents an electrolyte path from one cell to another cell,
- providing a frame (23; 33) between each biplate (11) and/or biplate (11) and end terminal (21, 22; 31, 32) being attached to each biplate (11) in a non-sealing manner to permit ambient gas to pass between adjacent cells, thereby creating a common gas space for all cells in the battery, and
- sealing said common gas space.

13. The method according to claim 12, wherein said first side is selected to be the negative side and the inner barrier (14) is arranged at least around the perimeter of the negative electrode (12) on the negative side of each biplate (11).

14. The method according to claim 13, wherein an additional inner barrier (16) is arranged around the perimeter of the positive electrode (13) on the positive side of each biplate (11).

15. The method according to any of claims 12-14, wherein the method further comprises the step of providing a pressure relief valve (25) in one of said end terminals (22) to allow the common gas space to be connected to the ambient environment if the pressure in the common gas space exceeds a predetermined value.

16. The method according to any of claims 12-15, wherein the method further comprises the step of providing a pressure sensor (26) to one of the end terminals (21) to monitor the pressure inside the common gas space.

17. The method according to any of claims 12-16, wherein the provided frame is made from a hydrophobic material and arranged in such a way that it acts as the inner barrier, eliminating the need of a separate inner barrier.

18. The method according to any of claims 12-17, wherein the method further comprises the steps of:
- arranging at least one of said end terminals (22; 31, 32) and each biplate (11) into a casing (27; 34) in an electrically insulated manner,
- attaching and sealing the casing (27; 34) to one of said end terminals (22; 32) in a gas tight manner thereby providing said sealed housing.

19. The method according to claim 18, wherein the method further comprises the step of providing an electrically insulating layer (35) at least partially arranged to the inside of a metal casing (34) to provide said insulation.

20. The method according to claim 18, wherein the step of providing a frame (33) further includes providing a frame made of an electrically insulating material and arranging said frame within the battery to provide said insulation.

21. The method according to any of claims 12-20, wherein the step of providing an inner barrier (14) includes providing an inner barrier made of a flouropolymer material.

22. The method according to any of claims 12-21, wherein said step of sealing said common gas space includes sealing said housing.

23. The bipolar battery according to any of claims 1-11, wherein said housing is a sealed housing.

## Patentansprüche

1. Zweipoliger Akkumulator (20; 30) mit nicht frei beweglichem Elektrolyten, und mit zumindest zwei Akkumulatorzellen, wobei vorgesehen sind:
- ein Gehäuse,
- eine negative Anschlussklemme (21; 31), die eine negative Elektrode (12) aufweist,
- eine positive Anschlussklemme (22; 32), die eine positive Elektrode (13) aufweist,
- zumindest eine Doppelplatten-Baugruppe (10; 17), die jeweils eine negative Elektrode (12) aufweist, die an einer negativen Seite einer Doppelplatte (11) angebracht ist, und eine positive Elektrode (13), die an einer positiven Seite angebracht ist, die entgegengesetzt zur negativen Seite angeordnet ist, der Doppelplatte (11), die in einem Sandwich-Aufbau zwischen der negativen (21; 31) und der positiven (22; 32) Anschlussklemme angeordnet ist, und
- ein Separator (24), der zwischen jeder negativen (12) und positiven (13) Elektrode angeordnet ist, die eine Akkumulatorzelle bilden, wobei der Separator (24) einen Elektrolyten aufweist,
**dadurch gekennzeichnet, dass**
- eine innere Sperre (14; 16) aus einem hydrophoben Material um den Umfang zumindest einer Elektrode (12) an einer ersten Seite jeder Doppelplatte (11) angeordnet ist, wodurch die innere Sperre (14; 16) einen Elektrolytweg von einer Zelle zu einer anderen Zelle verhindert, und
- ein Rahmen (23; 33) vorgesehen ist, um einen vorbestimmten Zellenabstand (w) zwischen jeweils zwei Doppelplatten (11) und/oder einer Doppelplatte (11) und einer Anschlussklemme (21, 22; 31, 32) zur Verfügung zu stellen, wobei der Rahmen (23; 33) in einer nicht abdichtenden Art und Weise an jeder Doppelplatte (11) angebracht ist, um den Durchgang von Umgebungsgas zwischen benachbarten Zellen zu ermöglichen, wodurch ein gemeinsamer Gasraum für alle Zellen in dem Akkumulator geschaffen wird.

2. Zweipoliger Akkumulator nach Anspruch 1, bei welchem die erste Seite die negative Seite ist, und die innere Sperre (14) zumindest um den Umfang der negativen Elektrode (12) herum an der negativen Seite jeder Doppelplatte (11) angeordnet ist.

3. Zweipoliger Akkumulator nach Anspruch 2, bei welchem eine zusätzliche innere Sperre (16) um den Umfang der positiven Elektrode (13) an der positiven Seite jeder Doppelplatte (11) angeordnet ist.

4. Zweipoliger Akkumulator nach einem der Ansprüche 1 bis 3, bei welchem eine der Anschlussklemmen (22) mit einem Druckentlastungsventil (25) versehen ist, um zu ermöglichen, dass der gemeinsame Gasraum mit der äußeren Umgebung verbunden wird, falls der Druck in dem gemeinsamen Gasraum einen vorbestimmten Wert überschreitet.

5. Zweipoliger Akkumulator nach einem der Ansprüche 1 bis 4, bei welchem ein Drucksensor (26) an einer der Anschlussklemmen (21) angebracht ist, um den Druck im Inneren des gemeinsamen Gasraums zu überwachen.

6. Zweipoliger Akkumulator nach einem der Ansprüche 1 bis 5, bei welchem der Rahmen aus einem hydrophoben Material mit ausgeformten Gaskanälen besteht, wodurch der Rahmen als die innere Sperre dient.

7. Zweipoliger Akkumulator nach einem der Ansprüche 1 bis 6, bei welchem das abgedichtete Gehäuse eine Umhüllung (27; 34) aufweist, gegen welche zumindest eine der Anschlussklemmen (21; 31, 32) und jede Doppelplatte (11) elektrisch isoliert sind, wobei die Umhüllung an einer der Anschlussklemmen (21; 31) gasdicht angebracht ist, wodurch das abgedichtete Gehäuse zur Verfügung gestellt wird.

8. Zweipoliger Akkumulator nach Anspruch 7, bei welchem das Innere der Umhüllung (34) zumindest teilweise mit einer isolierenden Schicht (35) zur Bereitstellung der Isolierung versehen ist.

9. Zweipoliger Akkumulator nach Anspruch 7, bei welchem jeder Rahmen (23) aus einem elektrisch isolierenden Material besteht, und innerhalb des Akkumulators angeordnet ist, um die Isolierung zur Verfügung zu stellen.

10. Zweipoliger Akkumulator nach einem der Ansprüche 1 bis 9, bei welchem die hydrophobe Sperre (14) ein Fluorpolymermaterial oder ein ähnliches Material ist.

11. Zweipoliger Akkumulator nach einem der Ansprüche 1 bis 10, der ein NiMH-Akkumulator ist.

12. Verfahren zur Herstellung eines zweipoligen Akkumulators (20; 30) mit nicht frei beweglichem Elektrolyten, der zumindest zwei Zellen aufweist, mit folgenden Schritten:
- Bereitstellung eines Gehäuses,
- Anordnen einer ersten Anschlussklemme (21; 22), die eine negative Elektrode (12) aufweist, innerhalb des Gehäuses,
- Anordnen zumindest einer Doppelplatten-Baugruppe (10; 17), die jeweils eine negative Elektrode (12) aufweist, die an einer negativen Seite einer Doppelplatte (11) angebracht ist, und eine positive Elektrode (13), die an einer positiven Seite angebracht ist, entgegengesetzt zur negativen Seite, der Doppelplatte (11), in einem Sandwich-Aufbau zwischen der ersten Anschlussklemme (21; 31) und einer zweiten Anschlussklemme (22; 32), die eine positive Elektrode (13) aufweist, innerhalb des Gehäuses, und
- Anordnen eines Separators (24) zwischen jeder negativen (12) und jeder positiven (13) Elektrode, die eine Akkumulatorzelle bilden, wobei der Separator (24) einen Elektrolyten aufweist,
**dadurch gekennzeichnet, dass** das Verfahren weitere folgende Schritte aufweist:
- Bereitstellung einer inneren Sperre (14; 16) aus einem hydrophoben Material, angeordnet um den Umfang zumindest einer Elektrode (12), an einer ersten Seite jeder Doppelplatte (11), wodurch die innere Sperre (14; 16) einen Elektrolytweg von einer Zelle zu einer anderen Zelle verhindert,
- Bereitstellung eines Rahmens (23; 33) zwischen jeweils zwei Doppelplatten (11) und/oder einer Doppelplatte (11) und einer Anschlussklemme (21, 22; 31, 32), die an jeder Doppelplatte (11) angebracht ist, auf nicht-abdichtende Art und Weise, damit Umgebungsgas zwischen benachbarten Zellen hindurchgelangen kann, wodurch ein gemeinsamer Gasraum für alle Zellen in dem Akkumulator geschaffen wird, und
- Abdichten des gemeinsamen Gasraums.

13. Verfahren nach Anspruch 12, bei welchem die erste Seite so ausgewählt wird, dass sie die negative Seite ist, und die innere Sperre (14) zumindest um den Umfang der negativen Elektrode (12) herum an der negativen Seite jeder Doppelplatte (11) angeordnet wird.

14. Verfahren nach Anspruch 13, bei welchem eine zusätzliche innere Sperre (16) um den Umfang der positiven Elektrode (13) herum an der positiven Seite jeder Doppelplatte (11) angeordnet wird.

15. Verfahren nach einem der Ansprüche 12 bis 14, welches weiterhin den Schritt aufweist, ein Druckentlastungsventil (25) in einer der Anschlussklemmen (21, 22) vorzusehen, um zu ermöglichen, dass der gemeinsame Gasraum mit der äußeren Umgebung verbunden wird, wenn der Druck in dem gemeinsamen Gasraum einen vorbestimmten Wert überschreitet.

16. Verfahren nach einem der Ansprüche 12 bis 15, welches den weiteren Schritt umfasst, einen Drucksensor (26) bei einer der Anschlussklemmen (21) zur Verfügung zu stellen, um den Druck innerhalb des gemeinsamen Gasraums zu überwachen.

17. Verfahren nach einem der Ansprüche 12 bis 16, bei welchem der bereitgestellte Rahmen aus einem hydrophoben Material hergestellt wird, und auf solche Weise angeordnet wird, dass er als die innere Sperre dient, wodurch das Erfordernis einer getrennten inneren Sperre ausgeschaltet wird.

18. Verfahren nach einem der Ansprüche 12 bis 17, welches weitere folgende Schritte umfasst:
- Anordnen zumindest einer der Anschlussklemmen (22; 31, 32) und jeder Doppelplatte (11) in einer Umhüllung (27; 34) auf eine elektrisch isolierende Art und Weise,
- Anbringen der Umhüllung (27; 34) an einer der Anschlussklemmen (22; 32) und gasdichtes Abdichten gegen diese, wodurch das abgedichtete Gehäuse zu Verfügung gestellt wird.

19. Verfahren nach Anspruch 18, mit dem weiteren Schritt der Bereitstellung einer elektrisch isolierenden Schicht (35), die zumindest teilweise an der Innenseite einer Metall-Umhüllung (34) angeordnet wird, zur Bereitstellung der Isolierung.

20. Verfahren nach Anspruch 18, bei welchem der Schritt der Bereitstellung eines Rahmens (33) weiterhin umfasst, einen aus einem elektrisch isolierenden Material hergestellten Rahmen bereitzustellen, und den Rahmen in dem Akkumulator anzuordnen, um die Isolierung zur Verfügung zu stellen.

21. Verfahren nach einem der Ansprüche 12 bis 20, bei welchem der Schritt der Bereitstellung einer inneren Sperre (14) umfasst, eine innere Sperre bereitzustellen, die aus einem Fluorpolymermaterial hergestellt ist.

22. Verfahren nach einem der Ansprüche 12 bis 21, bei welchem der Schritt der Abdichtung des gemeinsamen Gasraums die Abdichtung des Gehäuses umfasst.

23. Zweipoliger Akkumulator nach einem der Ansprüche 1 bis 11, bei welchem das Gehäuse ein abgedichtetes Gehäuse ist.

## Revendications

1. Batterie bipolaire non immergée (20 ; 30) ayant au moins deux éléments de batterie comprenant :
- un logement,
- une borne d'extrémité négative (21 ; 31) ayant une électrode négative (12),
- une borne d'extrémité positive (22 ; 32) ayant une électrode positive (13),
- au moins un ensemble de biplaques (10 ; 17) ayant chacun une électrode négative (12) montée sur un côté négatif d'une biplaque (11) et une électrode positive (13) montée sur un côté positif opposé audit côté négatif de la biplaque (11), agencé en une structure en sandwich entre lesdites bornes d'extrémité négative (21 ; 31) et positive (22 ; 32), et
- un séparateur (24) agencé entre chaque électrode négative (12) et positive (13) formant un élément de batterie, ledit séparateur (24) comprenant un électrolyte,
**caractérisée en ce que** :
- une barrière interne (14 ; 16) constituée d'un matériau hydrophobe est agencée autour du périmètre d'au moins une électrode (12) sur un premier côté de chaque biplaque (11), moyennant quoi ladite barrière interne (14 ; 16) empêche un trajet d'électrolyte d'un élément à un autre, et
- un cadre (23 ; 33) est présent pour former un espacement d'élément prédéterminé (w) entre chaque biplaque (11) et/ou une biplaque (11) et une borne d'extrémité (21, 22 ; 31, 32), ledit cadre (23 ; 33) est fixé de manière non étanche à chaque biplaque (11) pour permettre à un gaz environnant de passer entre des éléments adjacents, créant ainsi un espace gazeux commun pour tous les éléments dans la batterie.

2. Batterie bipolaire selon la revendication 1, dans laquelle le premier côté est le côté négatif et la barre interne (14) est agencée au moins autour du périmètre de l'électrode négative (12) sur le côté négatif de chaque biplaque (11).

3. Batterie bipolaire selon la revendication 2, dans laquelle une barrière interne supplémentaire (16) est agencée autour du périmètre de l'électrode positive (13) sur le côté positif de chaque biplaque (11).

4. Batterie bipolaire selon l'une quelconque des revendications 1 à 3, dans laquelle l'une des bornes d'extrémité (22) est pourvue d'une soupape de décharge (25) pour permettre à l'espace gazeux commun d'être raccordé à l'environnement ambiant si la pression dans l'espace gazeux commun dépasse une valeur prédéterminée.

5. Batterie bipolaire selon l'une quelconque des revendications 1 à 4, dans laquelle un capteur de pression (26) est fixé à l'une des bornes d'extrémité (21) pour surveiller la pression à l'intérieur de l'espace gazeux commun.

6. Batterie bipolaire selon l'une quelconque des revendications 1 à 5, dans laquelle le cadre est constitué d'un matériau hydrophobe présentant des passages de gaz moulés, moyennant quoi le cadre agit comme la barrière interne.

7. Batterie bipolaire selon l'une quelconque des revendications 1 à 6, dans laquelle le logement étanche comprend un boîtier (27 ; 34) duquel au moins une desdites bornes d'extrémité (21 ; 31, 32) et chaque biplaque (11) sont électriquement isolées, le boîtier étant fixé à l'une desdites bornes d'extrémité (21 ; 31) de manière étanche aux gaz, formant ainsi ledit logement étanche.

8. Batterie bipolaire selon la revendication 7, dans laquelle l'intérieur dudit boîtier (34) est au moins partiellement agencé avec une couche isolante (35) pour assurer ladite isolation.

9. Batterie bipolaire selon la revendication 7, dans laquelle au moins chaque cadre (23) est constitué d'un matériau électriquement isolant et est agencé dans la batterie pour assurer ladite isolation.

10. Batterie bipolaire selon l'une quelconque des revendications 1 à 9, dans laquelle ladite barrière hydrophobe (14) est un matériau de fluoropolymère ou un matériau similaire.

11. Batterie bipolaire selon l'une quelconque des revendications 1 à 10, dans laquelle la batterie bipolaire est une batterie NiMH (batterie au nickel-métal-hydrure).

12. Procédé de fabrication d'une batterie bipolaire non ouverte (20 ; 30) ayant au moins deux éléments comprenant les étapes consistant à :
- former un logement
- agencer une première borne d'extrémité (21 ; 22) ayant une électrode négative (12) dans le logement,
- agencer au moins un ensemble de biplaques (10 ; 17), chacun ayant une électrode négative (12) montée sur un côté négatif d'une biplaque (11) et une électrode positive (13) montée sur un côté positif opposé audit côté négatif de la biplaque (11), dans une structure en sandwich entre ladite première borne d'extrémité (21 ; 31) et une seconde borne d'extrémité (22 ; 32), ayant une électrode positive (13) dans chaque logement, et
- agencer un séparateur (24) entre chaque électrode négative (12) et positive (13) formant un élément de batterie, ledit séparateur (24) comprenant l'électrolyte,
**caractérisé en ce que** le procédé comprend en outre les étapes consistant à :
- former une barrière interne (14 ; 16) d'un matériau hydrophobe agencé autour du périmètre d'au moins une électrode (12) sur un premier côté de chaque biplaque (11), moyennant quoi ladite barrière interne (14 ; 16) empêche un trajet d'électrolyte d'un élément à un autre,
- former un cadre (23 ; 33) entre chaque biplaque (11) et/ou une biplaque (11) et une borne d'extrémité (21, 22 ; 31, 32) fixé à chaque biplaque (11) de manière non étanche pour permettre à un gaz ambiant de passer entre des éléments adjacents, créant ainsi un espace gazeux commun pour tous les éléments dans la batterie, et
- étanchéifier ledit espace gazeux commun.

13. Procédé selon la revendication 12, dans lequel ledit premier côté est choisi pour être le côté négatif et la barrière interne (14) est agencée au moins autour du périmètre de l'électrode négative (12) sur le côté négatif de chaque biplaque (11).

14. Procédé selon la revendication 13, dans lequel une autre barrière interne (16) est agencée autour du périmètre de l'électrode positive (13) sur le côté positif de chaque biplaque (11).

15. Procédé selon l'une quelconque des revendications 12 à 14, dans lequel le procédé comprend en outre l'étape consistant à disposer une soupape de décharge de pression (25) dans une desdites bornes d'extrémité (22) pour permettre à l'espace gazeux commun d'être raccordé à l'environnement ambiant si la pression dans l'espace gazeux commun dépasse une valeur prédéterminée.

16. Procédé selon l'une quelconque des revendications 12 à 15, dans lequel le procédé comprend en outre l'étape consistant à disposer un capteur de pression (26) à une des bornes d'extrémité (21) pour surveiller la pression à l'intérieur de l'espace gazeux commun.

17. Procédé selon l'une quelconque des revendications 12 à 16, dans lequel le cadre prévu est constitué d'un matériau hydrophobe et agencé de telle sorte qu'il agit en tant que barrière interne, éliminant la nécessité d'une barrière interne distincte.

18. Procédé selon l'une quelconque des revendications 12 à 17, dans lequel le procédé comprend en outre les étapes consistant à :
- agencer au moins une desdites bornes d'extrémité (22 ; 31, 32) et chaque biplaque (11) dans un boîtier (27 ; 34) de manière électriquement isolée,
- fixer et étanchéifier le boîtier (27 ; 34) à l'une desdites bornes d'extrémité (22 ; 32) de manière étanche aux gaz, formant ainsi ledit logement étanche.

19. Procédé selon la revendication 18, dans lequel le procédé comprend en outre l'étape consistant à former une couche électriquement isolante (35) au moins partiellement agencée à l'intérieur d'un boîtier métallique (34) pour assurer ladite isolation.

20. Procédé selon la revendication 18, dans lequel l'étape consistant à former un cadre (33) comprend en outre la formation d'un cadre constitué d'un matériau électriquement isolant et l'agencement dudit cadre dans la batterie pour assurer ladite isolation.

21. Procédé selon l'une quelconque des revendications 12 à 20, dans lequel l'étape consistant à former la barrière interne (14) comprend la formation d'une barrière interne constituée d'un matériau de fluoropolymère.

22. Procédé selon l'une quelconque des revendications 12 à 21, dans lequel ladite étape d'étanchéification dudit espace gazeux commun comprend l'étanchéification dudit logement.

23. Batterie bipolaire selon l'une quelconque des revendications 1 à 11, dans laquelle ledit logement est un logement étanche.
